(19) Europäisches Patentamt
European Patent Office
Office européen des brevets

(11) Publication number: **0 254 343 A1**

(12) **EUROPEAN PATENT APPLICATION**

(21) Application number: **87201269.5**

(51) Int. Cl.[4]: **C08G 67/02**, B01J 31/00

(22) Date of filing: **01.07.87**

(30) Priority: **01.07.86 NL 8601713**

(43) Date of publication of application: **27.01.88 Bulletin 88/04**

(84) Designated Contracting States: **BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Catalyst compositions and process for preparing olefin/CO copolymers.**

(57) 1. Novel catalyst compositions characterized in that they are based upon:

a) a palladium compound,

b) a quaternary phosphonium salt of an acid with a pKa of less than 2, with the proviso that the acid is not a hydrohalogenic acid or a mixture of such a salt and acid, and

c) either a phosphorus bidentate ligand of the general formula $R^1R^2$-P-R-P-$R^3R^4$, wherein $R^1$, $R^2$, $R^3$ and $R^4$ are hydrocarbyl groups which may or may not be substituted with polar groups and R represents a bivalent organic bridging group containing at least two carbon atoms in the bridge, or a nitrogen bidentate ligand of the general formula

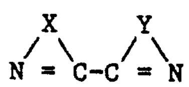

wherein X and Y are similar or dissimilar bridging groups, each containing three or four atoms in the bridge at least two of which are carbon atoms.

EP 0 254 343 A1

## CATALYST COMPOSITIONS AND PROCESS FOR PREPARING OLEFIN/CO COPOLYMERS

The invention relates to novel compositions which are suitable for use in the preparation of polymers of carbon monoxide with one or more olefinically unsaturated compounds.

High molecular weight linear polymers of carbon monoxide with one or more olefinically unsaturated compounds (for the sake of brevity referred to as A) wherein the monomer units occur in an alternating order and which polymers therefore consist of units of the formula -(CO)-A'-, wherein A' represents a monomer unit originating in a monomer A used, can be prepared by using catalyst compositions based on:

a) a palladium compound,

b) an acid with a pKa of less than 2, with the proviso that the acid is not a hydrohalogenic acid, and

c) either a phosphorus bidentate ligand of the general formula $R^1R^2$-P-R-P-$R^3R^4$, wherein $R^1$, $R^2$, $R^3$ and $R^4$ are hydrocarbyl groups which may or may not be substituted with polar groups and R represents a bivalent organic bridging group containing at least two carbon atoms in the bridge, or a nitrogen bidentate ligand of the general formula

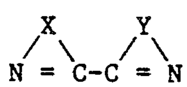

wherein X and Y represent similar or different bridging groups, each containing three or four atoms in the bridge at least two of which are carbon atoms.

Recent research into these catalyst compositions has revealed that if the acid mentioned as component b) is partly or wholly replaced by certain metal salts of the acid concerned, this will afford catalyst compositions having attractive activities for the polymerization of carbon monoxide with one or more olefinically unsaturated organic compounds.

Further research was directed at the possibility of replacing the acid mentioned as component b) partly or wholly by a quaternary phosphonium or ammonium salt of the acid concerned. This led to the following finds.

1) Catalyst compositions in which the acid mentioned as component b) is replaced by a quaternary ammonium salt of the acid concerned possess no or insufficient activity for the polymerization of carbon monoxide with one or more olefinically unsaturated organic compounds.

2) Catalyst compositions in which the acid mentioned as component b) is replaced by a quaternary phosphonium salt of the acid concerned possess attractive activity for the said polymerization.

3) By incorporating a compound chosen from the group formed by ethers, esters and ketones as a fourth component in the catalyst compositions containing a quaternary phosphonium salt as component b) and a phosphorus bidentate ligand as component c) the activity of these catalyst compositions for the said polymerization is considerably enhanced.

4) The activity for the said polymerization of catalyst compositions containing a quaternary phosphonium salt as component b) and a nitrogen bidentate ligand as component c) can be considerably enhanced by incorporating therein an organic oxidant as a fourth component.

5) Contrary to what is seen in catalyst compositions containing a quaternary phosphonium salt, the incorporation of a compound chosen from the group formed by ethers, esters and ketones into the catalyst composition containing a quaternary ammonium salt as component b) and a phosphorus bidentate ligand as component c) has no effect on their activity for the said polymerization.

6) Also in contrast with what was found for catalyst compositions containing a quaternary phosphonium salt, the incorporation of an organic oxidant in the catalyst composition containing a quaternary ammonium salt as component b) and a nitrogen bidentate ligand as component c) has no effect on the activity of these catalyst compositions for the said polymerization.

Catalyst compositions based on the components a) and c) and containing a phosphonium salt or a mixture of such a salt and acid as component b), are novel.

The present patent application therefore relates to novel catalyst compostions based upon:

a) a palladium compound,

b) a quaternary phosphonium salt of an acid with a pKa of less than 2, with the proviso that the acid is not a hydrohalogenic acid, or a mixture of such a salt and acid, and

c) either a phosphorus bidentate ligand of the general formula $R^1R^2$-P-R-P-$R^3R^4$, wherein $R^1$, $R^2$, $R^3$ and $R^4$ represent hydrocarbyl groups which may or may not be substituted with polar groups and R represents a bivalent organic bridging group containing at least two carbon atoms in the bridge, or a nitrogen bidentate ligand of the general formula

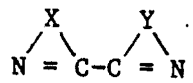

wherein X and Y are similar or dissimilar bridging groups, each containing three or four atoms in the bridge at least two of which are carbon atoms.

The patent application further relates to the application of these catalyst compositions in the preparation of polymers of carbon monoxide with one or more olefinically unsaturated organic compounds as well as to the polymers thus prepared.

Preferably the palladium compound used as component a) is a palladium salt of a carboxylic acid and in particular palladium acetate. Examples of suitable acids with a pKa of less than 2 (determined in aqueous solution at 18°C) are sulphuric acid, perchloric acid, sulphonic acids, such as methanesulphonic acid, trifluoromethanesulphonic acid and para-toluenesulphonic acid and carboxylic acids, such as trichloroacetic acid, difluoroacetic acid and trifluoroacetic acid. Preference is given to para-toluenesulphonic acid and trifluoroacetic acid. The quaternary phosphonium salt is preferably applied in a quantity of from 0.5 to 200 and in particular 1.0 to 100 equivalents per gram atom of palladium. If an acid is used in addition to a salt, preference is given to compositions in which the ratio between the number of equivalents of salt and the number of equivalents of acid is higher than 1.

The four hydrocarbyl groups which occur in the quaternary phosphonium salts attached to phosphorus may be alkyl, cycloalkyl or aryl groups. Examples of suitable quaternary phosphonium salts are tetramethyl, tetraethyl, dimethyl-di-phenyl, cyclohexyl-triphenyl, benzyl-triphenyl, tetraphenyl and methyl-triphenyl phosphonium salts. Preference is given to quaternary phosphonium salts in which at least one and in particular more than one of the hydrocarbyl groups are aryl groups. Very favourable results have been obtained using methyl-triphenyl phosphonium salts. The groups $R^1$, $R^2$, $R^3$ and $R^4$ present in the phosphorus bidentate ligand preferably contain 6 to 14 carbon atoms. Special preference is given to phosphorus bidentate ligands in which the groups $R^1$, $R^2$, $R^3$ and $R^4$ are phenyl groups or alkyl-substituted phenyl groups. The bivalent organic bridging group R preferably contains three carbon atoms in the bridge. Examples of suitable phosphorus bidentate ligands are:

1,3-bis(di-p-tolylphosphine)propane,
1,3-bis(di-p-methoxyphenylphosphine)propane,
1,3-bis(diphenylphosphine)propane, and
2-methyl-2-(methyldiphenylphosphine)-1,3-bis-(diphenyl phosphine)propane. Preferably either one of the latter two phosphorus bidentate ligands is used. The phosphorus bidentate ligand is preferably applied in a quantity of 0.1-5 and in particular of 0.5-1 5 mol per mol of palladium compound.

In the nitrogen bidentate ligands the bridging groups X and Y are linked by the two carbon atoms shown in the general formula. In addition to this bond the bridging groups X and Y can be linked by a further bond, such as is the case with 1,10-phenanthroline and compounds derived therefrom. If, in addition to the carbon atoms, the bridging groups X and Y contain further atoms in the bridge, these atoms are preferably nitrogen atoms. Further, preference is given to nitrogen bidentate ligands wherein the bridging groups X and Y are similar. Examples of suitable nitrogen bidentate ligands are 2,2'-bipyridine and compounds derived therefrom, such as

4,4'-dimethyl-2,2'-bipyridine,
4,4'-dichloro-2,2'-bipyridine,
4,4'-dimethoxy-2,2'-bipyridine and
4,4'-dicarboxy-2,2'-bipyridine.

Further examples of suitable nitrogen bidentate ligands that may be mentioned are 1,10-phenanthroline and compounds derived therefrom, such as

5-chloro-1,10-phenanthroline,
4,7-diphenyl-1,10-phenanthroline,
4 7-dimethyl-1,10-phenanthroline,
2,9-dichloro-1,10-phenanthroline,
1,10-phenanthroline-5-sulphonic acid and
4,7-diphenyl-1,10-phenanthrolinedisulphonic acids.

Examples of other suitable nitrogen bidentate ligands are 2,2'-biquinoline,
2-(2-pyridyl)benzimidazole, and
3-(2-pyridyl)-5,6-diphenyl-1,2,4-triazine.

The preferred nitrogen bidentate ligand is a 2,2'-bipyridine which may or may not be substituted or a 1,10-phenanth roline which may or may not be substituted. Special preference is given to the compounds 2,2'-bipyridine and 1,10-phenanthroline. In the catalyst compositions the nitrogen bidentate ligands are preferably used in a quantity of 0,5-200 and in particular 1-50 mol per mol of palladium compound.

If the catalyst compositions of the invention comprise a phosphorus bidentate ligand as component c) they preferably also include a compound chosen from the group ethers, esters and ketones, as component d).

Both linear and cyclic ethers can be incorporated in the catalyst compositions as component d). Both monoethers and polyethers are eligible ethers. An example of a suitable monether is tetrahydrofuran. Preference is given to the use of polyethers as the component d). Polyethers that are very suitable for the present purpose are the linear and the cyclic polyalkylene polyethers, in particular those that can be regarded as being

derived from ethylene glycol. An example of a very suitable linear polyethylene polyether is tetraglyme, i.e. the dimethyl ether of tetraethylene glycol. Especially preferred is the use of cyclic polyethylene polyethers (crown ethers) as the component d). 12 crown 4, 15 crown 5 and 18 crown 6 are very suitable crown ethers. (In the description x crown y that is used here, x refers to the total number of atoms present in the ring and y to the number of oxygen atoms present in the ring).

Both linear and cyclic esters and ketones may be incorporated in the catalyst compositions as the component d). Examples of cyclic esters and ketones are butyrolactone, cyclopentanone, cyclohexanone and cyclooctanone. The esters and ketones may be either aromatic, or aromatic/aliphatic, or exclusively aliphatic. Examples of aromatic and aromatic/aliphatic esters and ketones are methyl benzoate, benzophenone and acetophenone. The esters and ketones may contain one or more ester and ketone groups. Examples of esters and ketones containing more than one ester and ketone group are dimethyl carbonate, dimethyl terphthalate and hexanedione-2,5. In addition to ester and ketone groups, the esters and ketones may contain other functional groups, such as ether groups and halogens. Examples of such compounds are methoxy-diethyl ketone, chloroacetone and methoxy-methyl propionate. Compounds containing both an ester group and a ketone group are also eligible as component d). An example of such a compound is $\gamma$-oxo-methyl hexanoate. Preference is given to the use of esters and ketones having a linear structure as component d). Moreover, preference is given to aliphatic esters and ketones. Examples of very suitable esters are esters of aliphatic monoalcohols and aliphatic mono and dicarboxylic acids, such as methyl acetate, ethyl acetate, methyl propionate, ethyl propionate and dimethyl oxalate and esters of aliphatic dialcohols and aliphatic monocarboxylic acids, such as ethylene glycol monoacetate, ethylene glycol diacetate, propylene glycol monoacetate and propylene glycol diacetate. Examples of very suitable ketones are dialkyl ketones such as acetone, methyl-ethyl ketone and diethyl ketone.

The quantity of ether, ester or ketone used is preferably 0.5-10000 and in particular 1-5000 mol per mol of quaternary phosphonium salt.

If the catalyst compositions of the invention comprise a nitrogen bidentate ligand as component c), they preferably also include an organic oxidant.

Examples of suitable organic oxidants eligible for use as the components d) in the catalyst compositions that may be mentioned are 1,2-and 1,4-quinones, aliphatic nitrites such as methyl nitrite, ethyl nitrite, propyl nitrite and butyl nitrite, aromatic nitro-compounds such as nitrobenzene, nitrotoluene and nitrochlorobenzene and peroxides, such as di-tert-butyl peroxide and dicumyl peroxide. Preference is given to quinones and especially 1,4-quinones. In addition to substituted or unsubstituted benzoquinones other quinones, such as naphtaquinones and anthraquinones, which may or may not be substituted, are eligible for use. Benzoquinones are preferred, in particular 1,4-benzoquinones. Examples of suitable compounds of this type are:

2,6-dichloro-1,4-benzoquinone,
tetrachloro-1,4-benzoquinone,
2,3-dimethyl-1,4-benzoquinone,
2,6-dimethyl-1,4-benzoquinone,
monomethyl-1,4-benzoquinone,
trichloro-1,4-benzoquinone,
2,5-dihydroxy-1,4-benzoquinone,
2,5-dihydroxy-3,6-dinitro-1,4-benzoquinone and
mononitro-1,4-benzoquinone.

The preferred component d) is 1,4-benzoquinone. The quantity of organic oxidant used is preferably 1-10000 and in particular 10-5000 mol per gram atom of palladium.

The polymerization using the catalyst compositions according to the invention is preferably carried out in a liquid diluent. Very suitable liquid diluents are lower alcohols such as methanol and ethanol.

Eligible olefinically unsaturated organic compounds that can be polymerized with carbon monoxide with the aid of the catalyst compositions according to the invention are both compounds which consist exclusively of carbon and hydrogen and compounds which, in addition to carbon and hydrogen, contain one or more hetero-atoms. By preference the catalyst compositions according to the invention are used to prepare polymers of carbon monoxide with one or more olefinically unsaturated hydrocarbons. Examples of suitable hydrocarbon monomers are ethene and other $\alpha$-olefins, such as propene, butene-1, hexene-1 and octene-1 as well as styrene and alkyl-substituted styrenes, such as p-methyl styrene and p-ethyl styrene. The catalyst compositions according to the invention are especially suitable for use in the preparation of copolymers of carbon monoxide with ethene and in the preparation of terpolymers of carbon monoxide with ethene and with another olefinically unsaturated hydrocarbon, in particular propene.

The quantity of catalyst composition applied in the preparation of the polymers may vary within wide ranges. Per mol of olefinically unsaturated compound to be polymerized, a quantity of catalyst is used which preferably contains $10^{-7}$-$10^{-3}$ and in particular $10^{-6}$-$10^{-4}$ gram atom of palladium.

Preferably, the preparation of the polymers is carried out at a temperature of 20-200°C and a pressure of 1-200 bar and in particular at a temperature of 30-150°C and a pressure of 20-100 bar. In the mixture to be polymerized the molar ratio of the olefinically unsaturated organic compounds relative to carbon monoxide preferably is 10:1-1:5 and in particular 5:1-1:2. The carbon monoxide used in the preparation of the polymers according to the invention need not be pure. It may contain such contaminants as hydrogen, carbon dioxide and nitrogen.

The invention will now be illustrated with the aid of the following examples.

Example 1

A mechanically stirred autoclave of 250 ml capacity was charged with a catalyst solution comprising
50 ml of methanol,
0.1 mmol of palladium acetate,
2.2 mmol of tetrapropyl ammonium perchlorate and
0.15 mmol of 1,3-bis(diphenylphosphine)propane.
Carbon monoxide was introduced into the autoclave until a pressure of 30 bar was reached and then ethene until a pressure of 60 bar was reached. Finally, the autoclave was heated to 80°C. After 5 hours the autoclave was cooled down to room temperature and then the pressure was released.
No more than a trace of polymer material was obtained.

Example 2

This example was executed in substantially the same manner as Example 1, except that now the catalyst solution contained 25 ml of methanol and 25 ml of tetraglyme instead of 50 ml of methanol. Again, no more than a trace of polymer material was obtained.

Example 3

This example was executed in substantially the same manner as Example 1, except that a catalyst solution was used which contained

a) 1.8 mmol instead of 2.2 mmol of tetrapropyl ammonium perchlorate, and

b) 3 mmol of 2,2'-bipyridine instead of 0.15 mmol of 1,3-bis-(diphenylphosphine)propane. Again, no more than a trace of polymer material was obtained.

Example 4

This example was executed in substantially the same manner as Example 1, except that now a catalyst solution was used which contained

a) 1.8 mmol instead of 2.2 mmol of tetrapropyl ammonium perchlorate,

b) 3 mmol of 2,2'-bipyridine instead of 0.15 mmol of 1,3-bis-(diphenylphosphine)propane, and

c) 20 mmol of 1,4-benzoquinone. Again, no more than a trace of polymer material was obtained.

Example 5

A carbon monoxide/ethene copolymer was prepared by substantially repeating Example 1, the differences being that

a) the catalyst solution contained 2.2 mmol of methyl-triphenyl phosphonium para-tosylate instead of tetrapropyl ammonium perchlorate,

b) the reaction temperature was 90°C, and

c) after the pressure was released, the polymer formed was filtered off, washed with methanol and dried in vacuo at room temperature. The yield was 10 g of copolymer. The polymerization rate was therefore 200 g of copolymer/g of palladium/hour.

Example 6

A carbon monoxide/ethene copolymer was prepared in substantially the same manner as the copolymer of Example 5, the differences being that

a) the catalyst solution contained 25 ml of methanol and 25 ml of tetraglyme instead of 50 ml of methanol, and 1,9 mmol instead of 2.2 mmol of methyl-triphenyl phosphonium para-tosylate,

b) the reaction temperature was 80°C, and

c) the reaction time was 2 hours. The yield was 22 g of copolymer, so the polymerization rate was 1100 g of copolymer/g of palladium/hour.

Example 7

A carbon monoxide/ethene copolymer was prepared in substantially the same manner as the copolymer of Example 5, the differences being that

a) the catalyst solution contained 3 mmol of 2,2'-bipyridine instead of 0.15 mmol of 1,3-bis-(diphenylphosphine)propane, and 1.8 mmol instead of 2.2 mmol of methyl-triphenyl phosphonium para-tosylate, and

b) the reaction temperature was 100°C. The yield was 2 g of copolymer, so the polymerization rate was 40 g of copolymer/g of palladium/hour.

Example 8

A carbon monoxide/ethene copolymer was prepared in substantially the same manner as the copolymer of Example 5, the differences being that

a) the catalyst solution contained 3 mmol of 2,2'-bipyridine instead of 0.15 mmol of 1,3-bis-(diphenylphosphine)propane, and 1.8 mmol instead of 2.2 mmol of methyl-triphenyl phosphonium para-tosylate, and finally, 20 mmol of 1,4-benzoquinone,

b) the reaction temperature was 80°C, and

c) the reaction time was 15 minutes. The yield was 11 g of copolymer, so the polymerization rate was 4400 g of copolymer/g of palladium/hour.

Of the Examples 1-8, the Examples 5-8 are examples according to the invention. In these examples the polymers were prepared by using catalyst compositions of the invention containing a quaternary phosphonium salt as component b). Examples 1-4, in which catalyst compositions were used which contained a quaternary ammonium salt as component b), fall outside the scope of the invention. They have been included in the patent application for comparison.

From the results of Examples 1 and 3 it can be seen that catalyst compositions containing a quaternary ammonium salt as component b) and a phosphorus or nitrogen bidentate ligand as component c) have insufficient activity.

Comparison of the results of Examples 2 and 4 with those of Examples 1 and 3, respectively, shows that no improvement in the activity is obtained from incorporating an ether or a quinone in the catalyst compositions containing a quaternary ammonium salt as component b).

Comparison of the results of Examples 5 and 7 with those of Examples 6 and 8, respectively, shows that the activity of catalyst compositions containing a quaternary phosphonium salt as component b) and a phosphorus or nitrogen bidentate ligand as component c) can be much enhanced by the incorporation of an ether or a quinone.

All the carbon monoxide/ethene copolymers prepared according to Examples 5-8 had melting points of 257°C. With the aid of $^{13}C$-NMR analysis it was established that these polymers had a linear alternating structure and therefore consisted of units of the formula $-CO-(C_2H_4)-$.

## Claims

1. Novel catalyst compositions characterized in that they are based upon:

a) a palladium compound,

b) a quaternary phosphonium salt of an acid with a pKa of less than 2, with the proviso that the acid is not a hydrohalogenic acid or a mixture of such a salt and acid, and

c) either a phosphorus bidentate ligand of the general formula $R^1R^2-P-R-P-R^3R^4$, wherein $R^1$, $R^2$, $R^3$ and $R^4$ are hydrocarbyl groups which may or may not be substituted with polar groups and R represents a bivalent organic bridging group containing at least two carbon atoms in the bridge, or a nitrogen bidentate ligand of the general formula

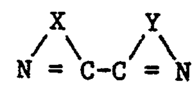

wherein X and Y are similar or dissimilar bridging groups, each containing three or four atoms in the bridge at least two of which are carbon atoms.

2. Catalyst compositions as claimed in claim 1, characterized in that in the quaternary phosphonium salt at least one of the hydrocarbyl groups attached to phosphorus is an aryl group.

3. Catalyst compositions as claimed in claim 2, characterized in that a methyl-triphenyl phosphonium salt is used as quaternary phosphonium salt.

4. Catalyst compositions as claimed in any one of claims 1 to 3, characterized in that 1,3-bis-(diphenylphosphine)propane or 2-methyl-2-(methyldiphenylphosphine)1,3-bis-(diphenylphosphine)-propane is used as component c).

5. Catalyst compositions as claimed in any one of claims 1-4, characterized in that a phosphorus bidentate ligand is used as component c) and a compound chosen from the group formed by ethers, esters and ketones is used as a further component d).

6. Catalyst compositions as claimed in claim 5, characterized in that a linear polyethylene polyether, such as tetraglyme, is used as component d).

7. Catalyst compositions as claimed in any one of claims 1 to 3, characterized in that a nitrogen bidentate ligand is used as component c) and an organic oxidant as a further component d).

8. Catalyst compositions as claimed in claim 7, characterized in that 2,2'-bipyridine or 1,10-phenanthroline is employed as component b).

9. Catalyst compositions as claimed in claims 7 or 8, characterized in that 1,4-quinone is used as component d).

10. Process for the preparation of polymers, characterized in that a mixture of carbon monoxide and one or more olefinically unsaturated organic compounds is polymerized by using a catalyst composition as claimed in any one of claims 1 to 9.

11. Process as claimed in claim 10, characterized in that it is applied for the preparation of copolymers of carbon monoxide with ethene.

12. Process as claimed in claim 10, characterized in that it is used for the preparation of terpolymers of carbon monoxide with ethene and propene.

European Patent Office

# EUROPEAN SEARCH REPORT

Application number

EP 87 20 1269

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 121 965 (SHELL)<br>* Claims 1-13; page 9, lines 2-4 *<br>--- | 1,5,6, 10-12 | C 08 G 67/02<br>B 01 J 31/00 |
| A | EP-A-0 170 311 (SHELL)<br>* Claims 1-3,11-20 *<br>--- | 1,7,8, 10-12 | |
| A | US-A-3 984 388 (SHRYNE et al.)<br>* Claims 1-10 *<br>----- | 1 | |
| | | | **TECHNICAL FIELDS SEARCHED (Int. Cl.4)** |
| | | | C 08 G<br>B 01 J |

The present search report has been drawn up for all claims

| Place of search | Date of completion of the search | Examiner |
|---|---|---|
| THE HAGUE | 12-11-1987 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82